# EUROPEAN PATENT SPECIFICATION

(11) **EP 1 597 831 B1**
(45) Date of publication and mention of the grant of the patent: **05.11.2014**
(21) Application number: 04710285.0
(22) Date of filing: 11.02.2004
(51) Int. Cl.: H04B 1/26, H04W 72/00

(54) **METHOD FOR JOINING DISPATCH CALLS**
VERFAHREN ZUM VERBINDEN VON DISPATCH-RUFEN
PROCEDE PERMETTANT DE REUNIR DES APPELS DE REPARTITION

(30) Priority: 19.02.2003 US 371594
(43) Date of publication of application: 23.11.2005
(73) Proprietor: Motorola Mobility LLC, Libertyville, IL 60048 (US)
(72) Inventor: SHAUGHNESSY, Mark, L., Phoenix, AZ 85048 (US); ARMBRUSTER, Peter, J., Chandler, AZ 85226 (US); KRAKORA, James, P., Gilbert, AZ 85233 (US); SCHAEFER, Bradley, R., Chandler, AZ 85248 (US); SHORES, William, Phoenix, AZ 85045 (US)
(74) Representative: Openshaw, Paul Malcolm
(86) International application number: PCT/US2004/004203
(87) International publication number: WO 2004/075001

(56) References cited:
- EP-A- 1 271 973
- WO-A-01/37604
- WO-A-02/37871
- DE-A1- 19 516 195
- US-A- 5 903 845
- US-A1- 2002 102 999

## Description

### Background of the Invention

The present invention pertains to joining dispatch call sessions and more particularly to a method for inviting participants to join a dispatch call.

Today most dispatch push-to-talk calls are forced type calls. That is, once the originator selects the person or persons to that he wishes to speak the selected or target user has the audio of his phone immediately blare out the words of the speaker. Since the target or receiving user has no control of the timing of the receipt of speech, the call is called a forced call. Target callers are forcibly joined into calls by the call processing server of the communication network, which automatically moves the target subscriber device to a bearer channel and connects them to audio or other media that is being sourced by the originating user. These are forced calls. Such forced calls often result in the audio or other media blaring out at the target subscriber's device at inopportune times. For example, a workman working on a project which requires his undivided attention would not wish his dispatch radio to suddenly blare while he was climbing a ladder or balancing on scaffolding.

Furthermore, in modern dispatch calls, each of the target units may not have the ergonomic requirements for receiving a forced dispatch call. That is, computers or certain radio telephones such as the typical cellular phone may not have a high audio capability, such as a speaker phone, and cannot accept forced dispatch calls.

Currently, dispatch phones do not provide the target user with the capability of rejecting forced calls.

Accordingly, it would be highly desirable to have methodology for providing an originating user with the ability to operate in a non-forced mode. Further, it would be highly desirable to provide target users of dispatch calls with the ability to accept or reject such forced or non-forced calls.

WO 01/37604 A discloses a method for processing group calls. A group list is created having a plurality of group members and preferably includes for each group member whether the group member requires an affirmative response when contacted, and an identifier. A request is received from an originator to contact the group members. At least one of the group members is contacted, and an affirmative response is requested. After receiving the affirmative response, the originator and group member are connected. If no affirmative response is received, the group member is not connected with the originator.

US 5,903,845 discloses an arrangement in which a subscriber enters personal information data into a personal information manager (PIM). The PIM, either automatically, or based on additional profile requests entered by the subscriber, generates profile update data associated with the personal information data.

US 2002/102999 A1 discloses an apparatus to form a group of communication devices over a distributed network. A first node establishes a first channel with a first communication device. At least one second node establishes at least one second channel with at least one second communication device. A controller electrically connected to the first node and the at least one second node comprises a database module. The database module comprises identification information of each of the communication devices of the group. The controller is dynamically configurable such that any single communication device of the group is capable of sending packet data through its respective channel to the other communication devices of the group.

### Brief Description of the Drawings

FIG. 1 is a block diagram of a communication network interconnection for supporting dispatch call services.
FIG. 2 is a flow chart of a dispatch call method for the originating user.
FIG. 3 is a flow chart of a dispatch call setup method for target users in a dispatch call.

### Description of the Preferred Embodiment of the Invention

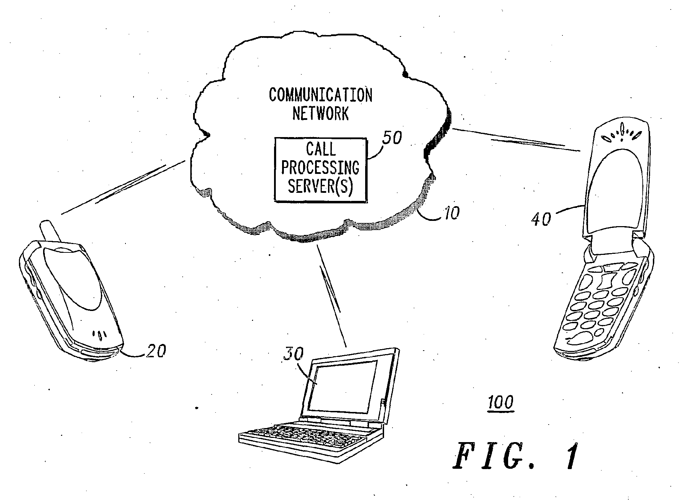

FIG. 1 depicts a communication system for facilitating dispatch call services. Communication system 100 includes a communication network 10 which has call processing server 50 to facilitate switching and transmission of bearer traffic between terminals 20-40. While a call processing server 50 is shown in the preferred embodiment, it is an optional element. Distributed call processing is also possible where each of the terminals provides necessary origination or termination call processing without the need for a call processing server 50. For purposes of explanation of the present invention, mobile unit 20 will be the originating unit and mobile units 30 and/or 40 will be the target units. Typically originating unit 20 would send a dispatch call request through network 10 and call processing server 50 for target mobile unit 40, for example. Server 50 and network 10 would automatically connect target unit 40 with originating unit 20 and target unit's loudspeaker would begin blaring the communication of originating unit 20. This is termed a forced dispatch call.

Target mobile unit 40 may be in the possession of a user (not shown) who is performing an action which requires his undivided attention, such as climbing a ladder. To have target unit 40 blare a communication from originating unit 20 may startle the user and result in serious injury, etc.

Another kind of dispatch call is an invited dispatch call. The invited dispatch call requires that the target user of the call accept the call before it will be completed and bearer traffic is delivered.

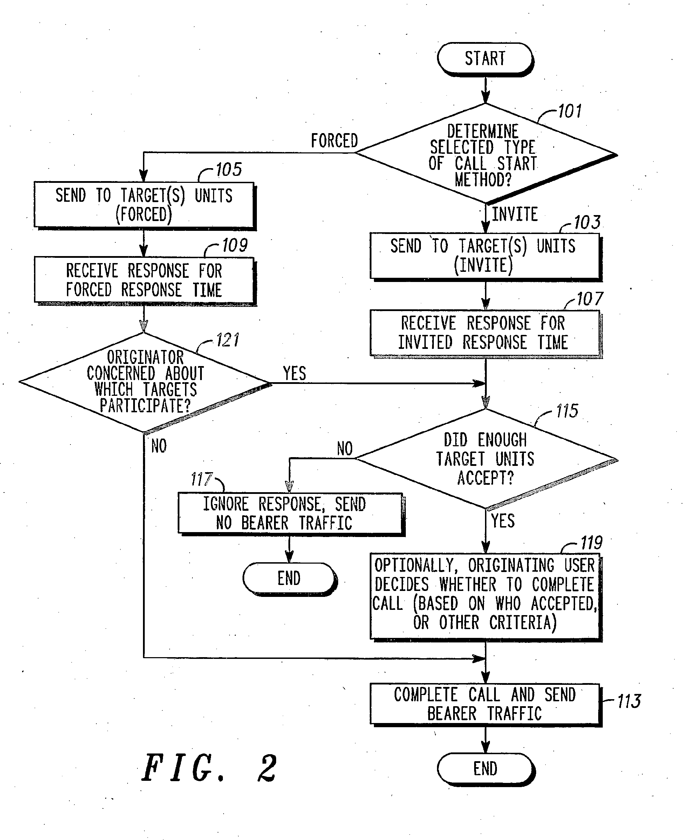

Referring to FIG. 2, a flow chart of a method for dispatch call setup for originating unit 20 is shown. The method is started and block 101 is entered. Block 101 determines which type of call start method has been selected by the originator. If the dispatch call type is a forced call, block 101 transfers control to block 105. The originating user may have a default dispatch call method if none is selected in real time.

Block 105 sends a forced dispatch call request through network 10 and call processing server 50 to target mobile units 30 and/or 40. For group calls, both target units 30 and 40 would typically be selected. For an individual dispatch call, one or the other of target units 30 or 40 would be selected.

Next, block 109 waits to gather call accept or reject responses from the target units for a configurable period of time which is appropriate for forced call processing. This time may be set to a default in the subscriber device, or it may be controlled by user preference, and would usually be set prior to the call. For forced calls, the time would typically be set to be relatively short, for example 0.5 to 2 seconds, since it is expected that most targets will immediately respond to a forced call request. As another example, if the originator is unconcerned about target party participation (as determined in block 121), then this time may be set to zero to speed call processing.

Next, block 121 determines whether the originating unit 20 is concerned about which target units participate in the call. If the originating unit 20 is not concerned about which of the target units participate in the dispatch call, block 121 transfers control to block 113 via the no path. Such transmission by the originating unit 20 would typically be a broadcast message to a group of target units who are not required to respond in real time.

If the originating unit 20 is concerned about which targets participate in the dispatch call, block 121 transfers control to block 115 via the yes path.

If the selected type of dispatch call start method is the invite, block 101 transfers control to block 103. Block 103 sends an invite request to each of the target user or users via network 10 and call processing server 50.

Next, block 107 waits to gather call accept or reject responses from the target units for a configurable period of time which is appropriate for invited call processing. This time may be set to a default in the subscriber device, or it may be controlled by user preference, and would usually be set prior to the call. For invited calls, the time would typically be set to be longer than for forced calls, for example 10 to 20 seconds, since it is expected that it may take some time for the users of target subscriber units to interact with the subscriber unit and respond to an invited call request. -

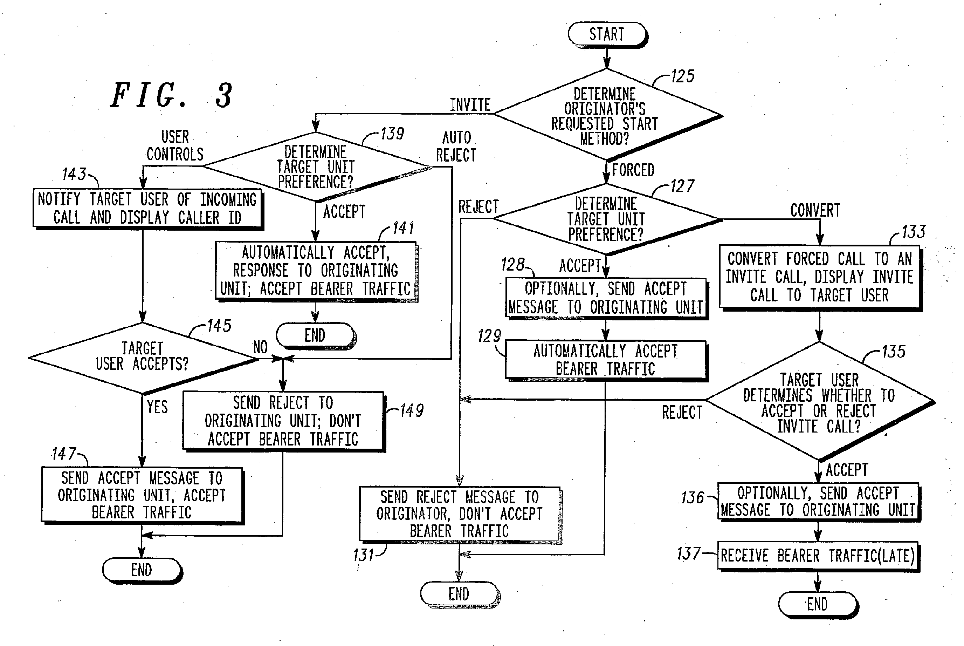

After responses from the target units have been received, block 107 transfers control to block 115. Typically, invited dispatch calls, will include responses from all the target units, but the system 100 may be configured to optionally not provide responses for forced dispatch calls, as described in Figure 3.

Next, block 115 determines whether enough target users have accepted in order to conduct the dispatch call. The threshold for "enough" target users accepting the call is configurable. It could be set to just one user, for example, for forced calls, if the originator just wants to be sure that at least one target party is listening. Or, it could be set to a percentage of the number of potential group members, e.g. 50%. Or, it could be set to all (100%) of the potential group members to be sure that all desired targets are included in the call. Then, if the configured threshold (or greater) of potential group call targets accept the call, control would be passed to block 119. If not enough users have accepted, block 115 transfers control to block 117 via the no path. Block 117 ignores the responses and sends no bearer traffic. Then the process is ended.

If sufficient target users did respond, block 115 transfers control to optional block 119 via the yes path. Optional block 119 presents the originating user with information about who has accepted the call, for example how many targets accepted the call, which specific targets accepted the call, which specific targets rejected the call, etc. This allows the originating user to make an informed decision about whether to complete the call to the targets, beyond simply knowing that the acceptance threshold, block 115, was reached. If the originator chooses to complete the call, the originating unit begins sending bearer traffic to the target units, block 113. The process is then ended.

Referring to FIG. 3, a flow chart of a dispatch call startup method for target mobile units 30 and 40 is shown. This method allows the target mobile unit 30 and 40 to optionally select the behavior upon receiving either forced or invited dispatch calls. This method allows a user of the target mobile unit to select the preferences that the target mobile unit will exhibit.

The method is started and block 125 is entered. Block 125 determines the originating unit 20's requested dispatch call start method. If a forced dispatch call has been sent by the originating unit 20, block 125 transfers control to block 127. Next, block 127 determines the present preferences of the target user 30 and 40. If the target unit's preferences were set to accept forced dispatch calls, block 127 transfers control to block 129. Block 129 automatically accepts bearer traffic. That is, the originator's audio will be output on the high audio output, typically a speaker, of the target unit 30 and/or 40. An optional step, block 128, before block 129 sends an accept message to the originating unit 20. This allows the originator to make informed decisions regarding which target(s) have accepted the call. However, the originator flow described in Figure 2 can continue properly without the accept message being sent by the target unit 30 and/or 40. The process is then ended.

If the target unit's preferences are set to reject forced dispatch calls, block 127 transfers control to block 131. Block 131 sends a reject message to the originating unit and does not accept any bearer traffic. The method is then ended.

If the target mobile unit 30 or 40 has its preferences set to convert the forced dispatch call, block 127 transfers control to block 133. Block 133 converts the forced dispatch call to an invite dispatch call and displays the invited call information to a target user. Next, the target user determines whether to accept or reject the invite call, block 135. If the target user has accepted the converted invite call, block 135 transfers control to block 137. Block 137 enables the target unit 30 or 40 to receive the bearer traffic, late. Late indicates that if the incoming dispatch call request was converted by the target unit 30 or 40 at its discretion, then depending upon the originating unit's 10 configuration, the bearer traffic for this call may have begun prior to the time the target user accepts the call. Thus, the target unit 30 or 40 may not receive the entire transmission, but this typically will be a minimal portion of the bearer traffic. An optional step, block 136, before block 137 sends an accept message to the originating unit 20. This allows the originator to make informed decisions regarding which target(s) have accepted the call. However, the originator flow described in Figure 2 can continue properly without the accept message being sent by the target unit 30 and/or 40. The method is then ended.

If the target user determines to reject the converted dispatch call, block 135 transfers control to block 131. Block 131 sends a reject message to the originating unit 20 and does not accept any bearer traffic. The process is then ended.

If the target unit 30 or 40 has determined that the originator's requested dispatch call request was an invite request, block 125 transfers control to block 139. Block 139 determines the preferences of the target unit. If the target units 30 or 40 preference is set to automatically accept, block 139 transfers control to block 141. Block 141 automatically accepts the invite dispatch call and responds to the originating unit with an accept message. The target unit 30 and/or 40 then accepts bearer traffic. The method is then ended.

If the target unit's 30 or 40 preference is set to automatically reject an invited dispatch call, block 139 transfers control to block 149. Block 149 sends a reject message to the originating unit and does not accept any bearer traffic. The method is then ended.

If the preferences of the target unit 30 or 40 are set to indicate that the user controls the response in real time, block 139 transfers control to block 143. Block 143 notifies the target user of the incoming invited dispatch call and displays caller ID type information. Next, block 145 determines whether the target user has accepted the invited dispatch call. If the target user does not accept the invite dispatch call in real time, block 145 transfers control to block 149 via the no path. Block 149 sends a reject message to the originating unit and does not accept any bearer traffic. If the target user accepts the invite dispatch call, block 145 transfer control to block 147 via the yes path. Block 147 sends an accept message to the originating unit 20 and accepts the bearer traffic when it is sent. The method is then ended.

All preferences mentioned above may be temporary settings which the user of the mobile unit may change depending upon current communication needs and the user's activities. Further, the target unit's behavior can be automatically set based on the capabilities of the dispatch platform used as the target unit. For example, if the platform does not accept or support high audio capability, then the target dispatch unit may be set never to accept forced dispatch calls.

**SUMMARY TABLE**

| | Target Preference Any Call Type | Target Preference Invite Only | Target Preference Forced Only |
|---|---|---|---|
| Originator Invite Call | Call Accepted | Call Accepted | Call Accepted (Auto Accepted by Target Device) |
| Originator Forced Call | Call Accepted | Call either Rejected or Converted to Invite at Target. | Call Accepted |

| | | | |
|---|---|---|---|
| Note : This table outlines actions without the Call Processing server converting call types. | | | |

As can be seen from the above explanation, the present invention provides new service level capabilities for mobile dispatch users. Both originating and target users may flexibly set their preferences for handling both invited and forced dispatch calls. These features include setting default values for call start methods; automatically accepting or rejecting forced or invited dispatch calls; and supporting particular logistics associated with displaying invite dispatch calls. These advantages allow the dispatch call function great flexibility and provide for a more tailored user experience (for example, white collar vs. blue collar environments), and enhanced safety of target users.

## Claims

1. A dispatch call setup method for a dispatch call between an originating unit (20) and at least one target unit (30, 40) via a communication network (100), the dispatch call setup method comprising the steps of:
sending (103, 105) a dispatch call message to the at least one target unit, the dispatch call message having a selected dispatch call setup type selected between a forced message and an invited message at the originating unit;
determining (115) whether a response from the at least one target unit is sufficient to conduct the dispatch call; and
if the response from the at least one target unit is sufficient to conduct the dispatch call, completing (113) the dispatch call between the originating unit and the at least one target unit.

2. The method for dispatch call setup as claimed in claim 1, wherein:
the dispatch call message including an invite message, the invite message being of a selected dispatch call setup type; and
if the response of the at least one target unit is insufficient to conduct the dispatch call, there is further included steps of:
ignoring the response of the at least one target unit; and
ending the call.

3. The method for dispatch call setup as claimed in claim 2, wherein if the at least one target unit accepted the invite message, there is further included steps of:
completing the dispatch call between the originating unit and the at least one target unit via the communication network; and
sending bearer traffic.

4. The method for dispatch call setup as claimed in claim 1, wherein there is further included a step of determining the selected dispatch call setup type.

5. The method for dispatch call setup as claimed in claim 4, wherein if the selected dispatch call setup type is a type for an invite message, the steps of: sending an call start message; receiving a response from the at least one target unit; if the response from the at least one target unit is sufficient to conduct the dispatch call, completing the dispatch call.

6. The method for dispatch call setup as claimed in claim 4, wherein if the selected dispatch call setup type is a type for a forced message, there is further included a step of sending a forced message to the at least one target unit.

7. A method for dispatch call setup for a dispatch call between an originating unit (20) and a target unit (30, 40) via a communication network (100), the method comprising the steps of:
receiving by the target unit an invite message for a dispatch call, the dispatch call message having a selected dispatch call setup type selected between a forced message and an invited message at the originating unit;
determining a preset preference of the target unit for the selected dispatch call setup type;
determining whether to accept the invite message based upon the preset preference; and
if the invite message is accepted, sending an accept message to the originating unit.

8. The method for dispatch call setup as claimed in claim 7, wherein if it is determined to reject the invite message, there is further included a step of sending a reject message to the originating unit.

9. The method for dispatch call setup as claimed in claim 7, wherein if the preset preference is for a user control, there is further included a step of notifying by the target unit a user of an incoming invite dispatch call.

10. The method for dispatch call setup as claimed in claim 7, wherein if the preset preference is for automatically accepting, there is further included steps of:
sending an accept response message to the originating unit; and
accepting bearer traffic.

11. The method for dispatch call setup as claimed in claim 7, wherein if the preset preference is for automatically rejecting the invite message, there is further included steps of:
sending by the target unit a reject message to the originating unit; and
inhibiting acceptance of bearer traffic.

12. The method for dispatch call setup as claimed in claim 7, wherein after the step of sending a response message to the originating unit, there is further included a step of accepting bearer traffic.

## Patentansprüche

1. Dispatch-Verbindungsaufbauverfahren für eine Dispatch-Verbindung zwischen einer Ausgangseinheit (20) und zumindest einer Zieleinheit (30, 40) über ein Kommunikationsnetzwerk (100), wobei das Dispatch-Verbindungsaufbauverfahren folgende Schritte umfasst:
Senden (103, 105) einer Dispatch-Verbindungsnachricht an die zumindest eine Zieleinheit, wobei die Dispatch-Verbindungsnachricht einen ausgewählten Dispatch-Verbindungsaufbautyp hat, der bei der Ausgangseinheit zwischen einer Zwangsnachricht und einer Anforderungsnachricht ausgewählt wird;
Ermitteln (115), ob eine Antwort von der zumindest einen Zieleinheit ausreichend ist die Dispatch-Verbindung auszuführen; und
Vollenden (113) der Dispatch-Verbindung zwischen der Ausgangseinheit und der zumindest einen Zieleinheit, falls die Antwort von der zumindest einen Zieleinheit ausreichend ist, die Dispatch-Verbindung auszuführen.

2. Dispatch-Verbindungsaufbauverfahren nach Anspruch 1, **dadurch gekennzeichnet,**
**dass** die Dispatch-Verbindungsnachricht eine Anforderungsnachricht enthält, wobei die Anforderungsnachricht von einem ausgewählten Dispatch-Verbindungaufbautyp ist; und
falls die Antwort von zumindest einer Zieleinheit nicht ausreichend ist, die Dispatch-Verbindung auszuführen, als weitere Schritte enthalten sind:
Ignorieren der Antwort der zumindest einen Zieleinheit und
Beenden der Verbindung.

3. Dispatch-Verbindungsaufbauverfahren nach Anspruch 2, **dadurch gekennzeichnet, dass** falls die zumindest eine Zieleinheit die Anforderungsnachricht akzeptiert, als weitere Schritte enhalten sind:
Vollenden der Dispatch-Verbindung zwischen der Ausgangseinheit und der zumindest einen Zieleinheit über das Kommunikationsnetzwerk; und
Senden von Trägerverkehr.

4. Dispatch-Verbindungsaufbauverfahren nach Anspruch 1, **dadurch gekennzeichnet, dass** ferner der Schritt Erfassen des ausgewählten Dispatch-Verbindungaufbautyps vorgesehen ist.

5. Dispatch-Verbindungsaufbauverfahren nach Anspruch 4, **dadurch gekennzeichnet, dass**, falls der ausgewählte Dispatch-Verbindungaufbautyp einem Typen einer Anforderungsnachricht entspricht die Schritte enthalten sind: Senden einer Verbindungsaufbaunachricht; Empfangen einer Antwort von der zumindest einen Zieleinheit; Vollenden des Dispatch-Verbindungsaufbaus, falls die Antwort von der zumindest einen Zieleinheit ausreichend ist, die Dispatch-Verbindung durchzuführen.

6. Dispatch-Verbindungsaufbauverfahren nach Anspruch 4, **dadurch gekennzeichnet, dass**, falls der ausgewählte Dispatch-Verbindungaufbautyp einem Typen einer Zwangsnachricht entspricht, der weitere Schritt enthalten ist: Senden einer Zwangsnachricht zu der zumindest einen Zieleinheit.

7. Dispatch-Verbindungsaufbauverfahren für eine Dispatch-Verbindung zwischen einer Ausgangseinheit (20) und einer Zieleinheit (30, 40) über ein Kommunikationsnetzwerk (100), wobei das Verfahren folgende Schritte umfasst:
Empfangen einer Anforderungsnachricht für eine Dispatch-Verbindung durch die Zieleinheit, wobei die Dispatch-Verbindungnachricht einen ausgewählten Dispatch-Verbindungaufbautyp hat, der an der Ausgangseinheit zwischen einer Zwangsnachricht und einer Anforderungsnachricht ausgewählt wird;
Erfassen einer voreingestellten Präferenz der Zieleinheit für den ausgewählten Dispatch-Verbindungaufbautyp;
Ermitteln, ob die Anforderungsnachricht auf der Basis der voreingestellten Präferenz akzeptiert wird; und,
falls die Anforderungsnachricht akzeptiert wird, Senden einer Akzeptierungsnachricht an die Ausgangseinheit.

8. Dispatch-Verbindungsaufbauverfahren nach Anspruch 7, **dadurch gekennzeichnet, dass**, wenn ermittelt wurde, dass die Anforderungsnachricht abgelehnt wird, als weiterer Schritt enthalten ist: Senden einer Ablehnungsnachricht zu der Ausgangseinheit.

9. Dispatch-Verbindungsaufbauverfahren nach Anspruch 7, **dadurch gekennzeichnet, dass**, wenn die voreingestellte Präferenz eine Benutzerkontrolle vorsieht, als weiterer Schritt enthalten ist: Informieren eines Benutzers durch die Zieleinheit über eine eingehenden Aufforderungs-Dispatch-Verbindung.

10. Dispatch-Verbindungsaufbauverfahren nach Anspruch 7, **dadurch gekennzeichnet, dass**, falls die voreingestellte Präferenz automatisches Akzeptieren vorsieht, als weitere Schritte enthalten sind:
Senden einer Annahmeantwortnachricht an die Ausgangseinheit; und
Akzeptieren von Trägerverkehr.

11. Dispatch-Verbindungsaufbauverfahren nach Anspruch 7, **dadurch gekennzeichnet, dass**, falls die voreingestellte Präferenz automatisches Ablehnen der Anforderungsnachricht vorsieht, als weitere Schritte enthalten sind:
Senden einer Ablehnungsnachricht durch die Zieleinheit an die Ausgangseinheit; und
Verhindern der Annahme von Trägerverkehr.

12. Dispatch-Verbindungsaufbauverfahren nach Anspruch 7, **dadurch gekennzeichnet, dass** nach dem Schritt des Sendens einer Antwortnachricht zu der Ausgangseinheit als weiterer Schritt enthalten ist: Akzeptieren des Transportverkehrs.

## Revendications

1. Procédé d'établissement d'appel d'expédition pour un appel d'expédition entre une unité d'origine (20) et au moins une unité cible (30, 40) via un réseau de communication (100), le procédé d'établissement d'appel d'expédition comprenant les étapes de:
envoyer (103, 105) un message d'appel d'expédition à l'au moins une unité cible, le message d'appel d'expédition présentant un type sélectionné d'établissement d'appel d'expédition sélectionné entre un message forcé et un message d'invité au niveau de l'unité d'origine ;
déterminer (115) si une réponse de l'au moins une unité cible est suffisante pour procéder à l'appel d'expédition; et
si la réponse de l'au moins une unité cible est suffisante pour procéder à l'appel d'expédition, faire aboutir (113) l'appel d'expédition entre l'unité d'origine et l'au moins une unité cible.

2. Procédé d'établissement d'appel d'expédition selon la revendication 1, dans lequel :
le message d'appel d'expédition comprend un message d'invitation, le message d'invitation étant d'un type d'établissement d'appel d'expédition sélectionné ; et
si la réponse de l'au moins une unité cible est insuffisante pour procéder à l'appel d'expédition, il est en outre inclus les étapes de :
ignorer la réponse de l'au moins une unité cible ; et
terminer l'appel.

3. Procédé d'établissement d'appel d'expédition selon la revendication 2, dans lequel si l'au moins une unité cible a accepté le message d'invitation, il est en outre inclus les étapes de :
faire aboutir l'appel d'expédition entre l'unité d'origine et l'au moins une unité cible via le réseau de communication ; et
envoyer le trafic porteur.

4. Procédé d'établissement d'appel d'expédition selon la revendication 1, dans lequel il est en outre inclus une étape de détermination du type d'établissement d'appel d'expédition sélectionné.

5. Procédé d'établissement d'appel d'expédition selon la revendication 4, dans lequel si le type d'établissement d'appel d'expédition sélectionné est un type pour un message d'invitation, il est en outre inclus les étapes de : envoyer un message de début d'appel ; recevoir une réponse de l'au moins une unité cible ; si la réponse de l'au moins une unité cible est suffisante pour procéder à l'appel d'expédition, faire aboutir l'appel d'expédition.

6. Procédé d'établissement d'appel d'expédition selon la revendication 4, dans lequel si le type d'établissement d'appel d'expédition sélectionné est un type pour un message forcé, il est en outre inclus une étape d'envoi d'un message forcé à l'au moins une unité cible.

7. Procédé d'établissement d'appel d'expédition pour un appel d'expédition entre une unité d'origine (20) et au moins une unité cible (30, 40) via un réseau de communication (100), le procédé d'établissement d'expédition d'appels comprenant les étapes de:
recevoir par l'unité cible un message d'invitation pour un appel d'expédition, le message d'appel d'expédition présentant un type sélectionné d'établissement d'appel d'expédition sélectionné choisi entre un message forcé et un message d'invitation au niveau de l'unité d'origine ;
déterminer une préférence prédéfinie de l'unité cible pour le type d'établissement d'appel d'expédition sélectionné ;
décider d'accepter le message d'invitation à partir de la préférence prédéfinie et
si le message d'invitation est accepté, envoyer un message d'acceptation à l'unité d'origine.

8. Procédé d'établissement d'appel d'expédition selon la revendication 7, dans lequel s'il est décidé de rejeter le message d'invitation, il est en outre inclus une étape d'envoi d'un message de rejet à l'unité d'origine.

9. Procédé d'établissement d'appel d'expédition selon la revendication 7, dans lequel si la préférence prédéfinie est pour un contrôle d'utilisateur, il est en outre inclus une étape de notification par l'unité cible à un utilisateur de l'arrivée d'un appel d'expédition d'invitation.

10. Procédé d'établissement d'appel d'expédition selon la revendication 7, dans lequel si la préférence prédéfinie est pour une acceptation automatique, il est en outre inclus les étapes de :
envoyer un message de réponse d'acceptation à l'unité d'origine ; et
accepter le trafic porteur.

11. Procédé d'établissement d'appel d'expédition selon la revendication 7, dans lequel si la préférence prédéfinie est pour un rejet automatique du message d'invitation, il est en coutre inclus les étapes de :
envoyer par l'unité cible un message de rejet à l'unité d'origine ; et
inhiber l'acceptation du trafic porteur.

12. Procédé d'établissement d'appel d'expédition selon la revendication 7, dans lequel après l'étape d'envoi d'un message de réponse à l'unité d'origine, il est en outre inclus une étape d'acceptation du trafic porteur.
